# EUROPEAN PATENT APPLICATION

(11) **EP 0 592 072 A2**
(43) Date of publication of application: **13.04.1994**
(21) Application number: 93305314.2
(22) Date of filing: 07.07.1993
(51) Int. Cl.: G06F 15/21

(54) **Computerized process control system**

(30) Priority: 07.10.1992 US 957138
(71) Applicant: International Business Machines Corporation, Armonk, N.Y. 10504 (US)
(72) Inventor: Campbell, David Lynn, Austin, Texas 78756 (US); Hambrick, Geoffrey Martin, Round Rock, Texas 78681 (US); Heyman, Jerrold Martin, Austin, Texas 78727 (US); Porter, Tracy Wells, Austin, Texas 78750 (US)
(74) Representative: Burt, Roger James, Dr.

(57) **Abstract**

A primitive process building block is utilized in representing each state of a process and implemented as a computerized class object from which all process states are derived. The building block has a generic set of actions whereby control may be transferred between states. Such generic transitions for each state thereby describe relative flow of a Work Item in the process either forward or backward in the process such as to a next or previous state, respectively, or looping within the same state. By defining each state with a uniform model across the system whereby the same set of actions enter and exit a given state, an improved, simplified user interface is provided. Generic actions further facilitate automated reporting functions and creation of a process quality matrix.

## Description

The invention relates to process control and, more particularly, to computerized systems and methods for modeling and managing processes.

Among the current methods for automating processes are those which track some kind of work item as it moves through various states and owners. Usually a State Transition Diagram (STD) is used to described the process as a finite state automaton. The automated actions are embodied in computer programs linked into the process controller system which shift the flow of control from one state to another.

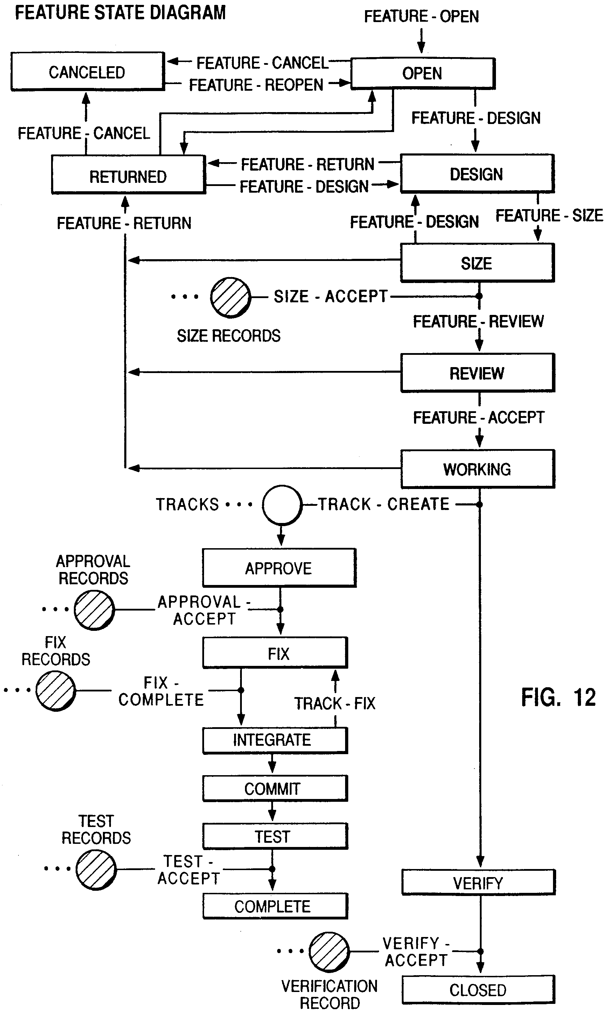

More particularly, in these state transition diagrams, states are represented by nodes and flow-of-control (e.g. transitions) are represented by directed arcs from one node to another. Each state and each transition is labelled and any state may be considered to be the composition of another STD, where transitions into and out of the state of the parent diagram appear as terminal transitions in the child diagram. The net effect is that an STD is completely expressive, in that any arbitrary complex process may be described by such prior art methods. A representative such STD may be seen in Fig. 12.

One problem with such systems is that because there is no consistency across states, processes defined in the foregoing manner are more difficult to describe, learn, automate, modify, measure, and compare. Each transition, for example, is named differently resulting in the user interface and associated menus for example, being inconsistent and difficult to construct.

A representative prior system is the KI shell available from the UES, Inc., 5162 Blazer Memorial Parkway, Dublin, OH, 43017-1339. In this system, states and transitions are provided as in the conventional manner wherein each transition is separately labelled. Each state is represented by a "frame" or description of the code occurring at that state. Various actions may be plugged into the frames which are then attached to transitions. The frames are functions in which each possible action and transition must be coded, resulting in a large "policy" for each state. Several drawbacks are associated with such conventional approaches which will hereinafter become more apparent. For example, contents of menus generated using this technology are dependent upon the customized labels given to each transition whereby the menus associated with different states in the process will appear different. Such systems moreover, render it difficult or impossible to implement automated menu generators since each menu must list its own custom transitions, whereby each menu might reflect for differing transitions, differing numbers and names of action items whereas in a preferred system, menus would appear similar regardless of the process state.

The KI shell is illustrative of the problem associated with standard state transition diagramming which does not make states unique building blocks. Traditional state transition methodology focuses on transitions associated with states which are each labelled distinctly and represent a frame of code. With such systems, code must be written defining each state, actions must be picked out from that state, and then code written not only defining what happens for each such action but which will also handle the transitions. A major problem associated with mingling code related to process policy (i.e. conditions under which a state change is allowed to occur) with code causing the change of state is that it makes it harder to understand the policy and change actions separately. It further makes it hard to modify the process or state change code without affecting the other code. Moreover, even if another transition has an identical policy but different change actions, both must be separately coded for both transitions in their entirety. The net effect of the foregoing is that readability and reusability of the code suffer.

Yet further undesirable consequences abound from prior art systems failing to provide for a unified model with which to define each state across the system. Among these are difficulties in efficiently describing processes and utilizing resulting computerized process management systems, deficiencies of prior art systems in providing easier to use process measurement and data interpretation techniques, technology for facilitating better comparison between processes and projects and the ability to facilitate building of automated tools associated with the processes.

It is accordingly an object of the invention to provide a system and method for computerized process modeling which permits actions to be changed separately and which facilitates the modification of code associated with each action without affecting the other code.

According to the invention there is provided a computerized process control system comprising a user interface means adapted to define a set of actions requiring user interaction with said system; a storage means for storing information relating to said actions defining actors, groups, objects, and life-cycles of said objects; said storage means including means for storing transitions generated from a generic process building block; and a control means interconnected to said user interface means and said storage means for executing said process control in response to said information and said user interaction.

There is further provided a method for operating a computerized process control system having a user interface for indicating quality of management of said process by said system, comprising storing in said system a model of said process, wherein each of a plurality of states of a state transition diagram of said model is represented by a generic process building block; logging transactions associated with each of said plurality of states during operation of said system; and generating in response to said logging a matrix relating generic transaction actions of a last action and a next action in said process.

In order that the invention may be well understood, a preferred embodiment thereof will now be described with reference to the accompanying drawings in which:
Fig. 1 is a conceptual illustration of the components comprising the configuration of the computerized process management system of the invention;
Fig. 2 is an illustration of a representative process building block;
Fig. 3 is a more detailed drawing of the storage module of Fig. 1;
Fig. 4 is a representative example of a screen generated by the user interface module of the system configuration of Fig. 1;
Fig. 5 is an illustrative schematic diagram appearing in a screen of the user interface module of Fig. 1 illustrating a problem solving process for Work Item C of Fig. 4;

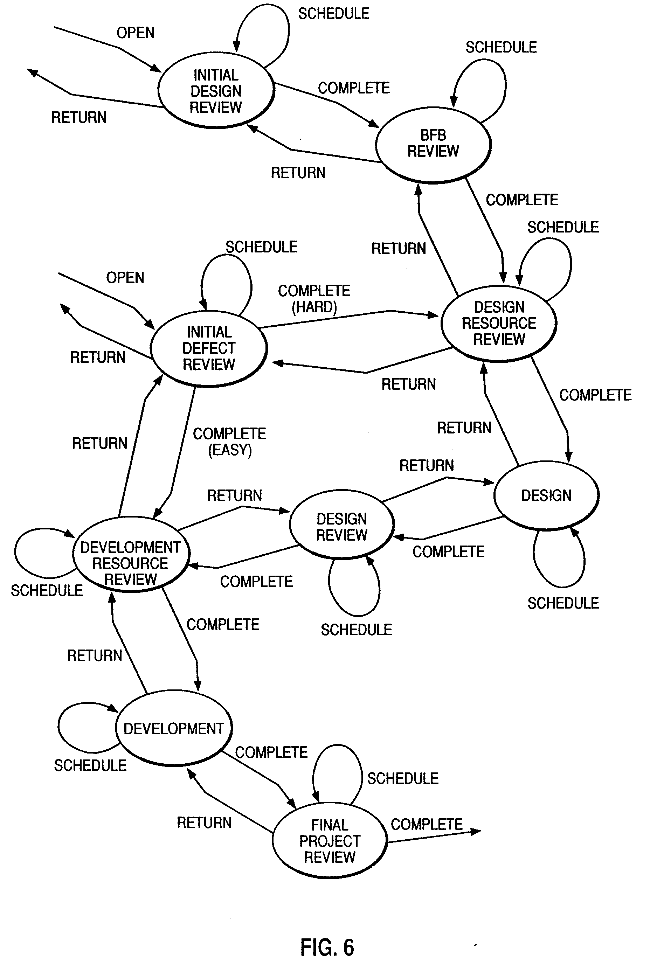

Fig. 6 is an illustration of a process flow diagram utilizing the process building block of Fig. 2;
Fig. 7 is another illustration of a process flow diagram for another process resulting from use of the process building block of Fig. 2 and depicting how such flow diagrams may be simplified through use of the process building block of the invention;
Fig. 8 is a detailed flow diagram of one implementation of the functions of the control module of Fig. 1;
Fig. 9 is a flow diagram indicating an illustrative implementation of the inheritance module of the control module of Figs. 1 and 8;
Fig. 10 is an illustrative flow diagram of a representative implementation of the complete transaction module of the control module of Figs. 1 and 8;
Fig. 11 is a representation of a matrix generated by the reporting module of Fig. 1 by use of the process building block of Fig. 2 for use in process quality management;
Fig. 12 is an illustration of a typical process flow diagram of the prior art generated without benefit of the process building block of Fig. 2 of the invention.

### Summary of the Invention

A primitive process building block is utilized in representing each state of a process and implemented as a computerized class object from which all process states are derived. The building block has a generic set of actions whereby control may be transferred to a state. Such generic transitions for each state thereby describe relative flow of a Work Item in the process either forward or backward to a next or previous state, respectively, or looping within the same state. By defining each state with a uniform model across the system whereby the same set of actions enter and exit a given state, an improved, simplified user interface is provided. Generic actions further facilitate automated reporting functions and creation of a process quality matrix.

### Detailed Description of the Preferred Embodiment

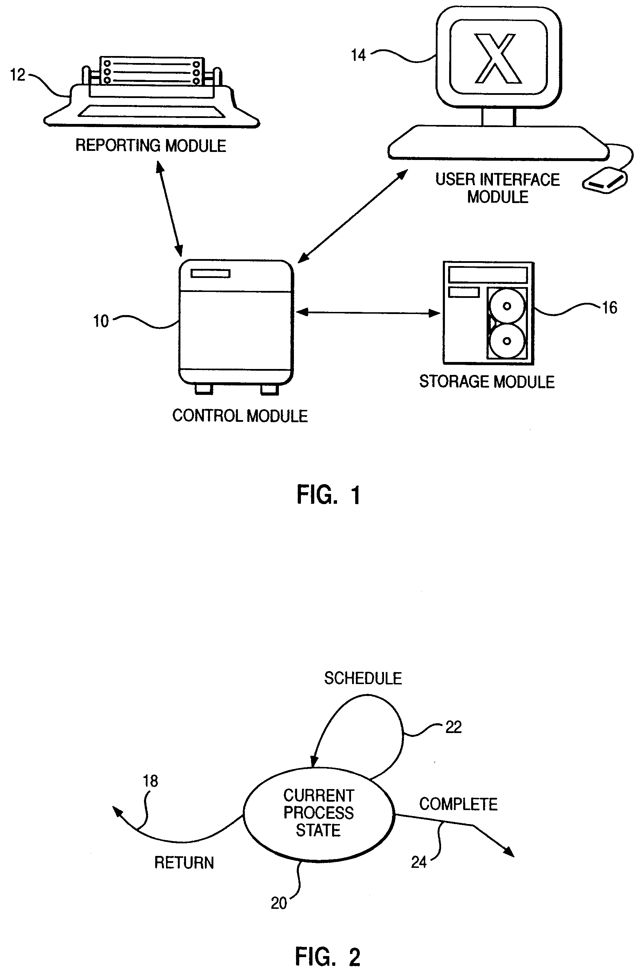

Fig. 1 depicts schematically the fundamental modules of the computerized general process control system of the invention, comprised of a control module 10 controlling a reporting module 12, user interface module 14, and storage module 16. Each such individual module will be hereinafter described in greater detail as well as their coaction.

First, however, the fundamental concept of a process building block giving rise to benefits of the invention will be described with respect to Fig. 2. It will be noted in passing that the system of Fig. 1 may be implemented by means of a general digital computer programmed to include the modules of Fig. 1 in accordance with the descriptions and flow diagrams which hereinafter follow.

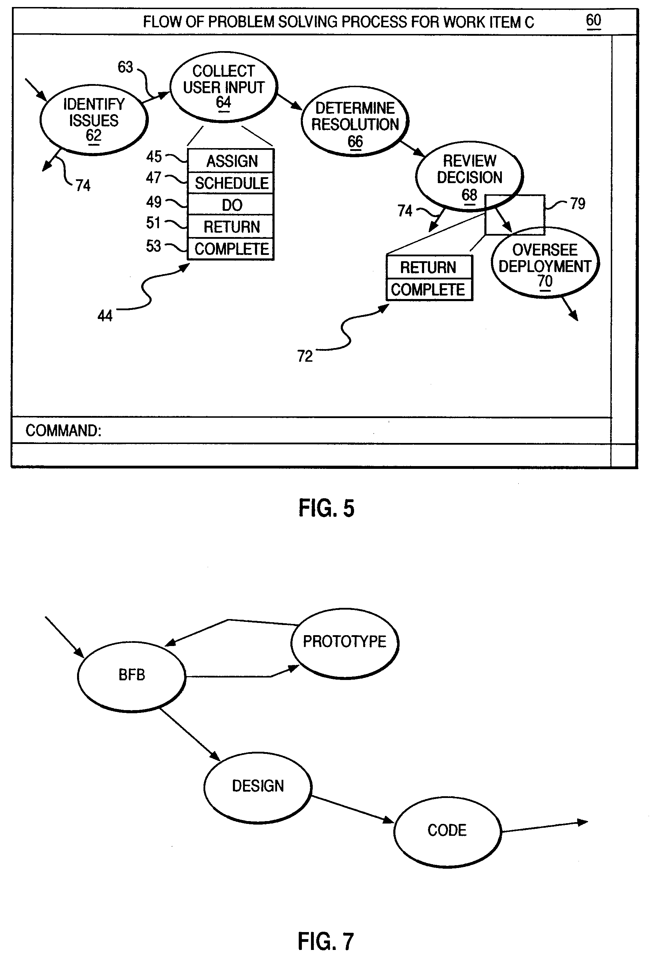

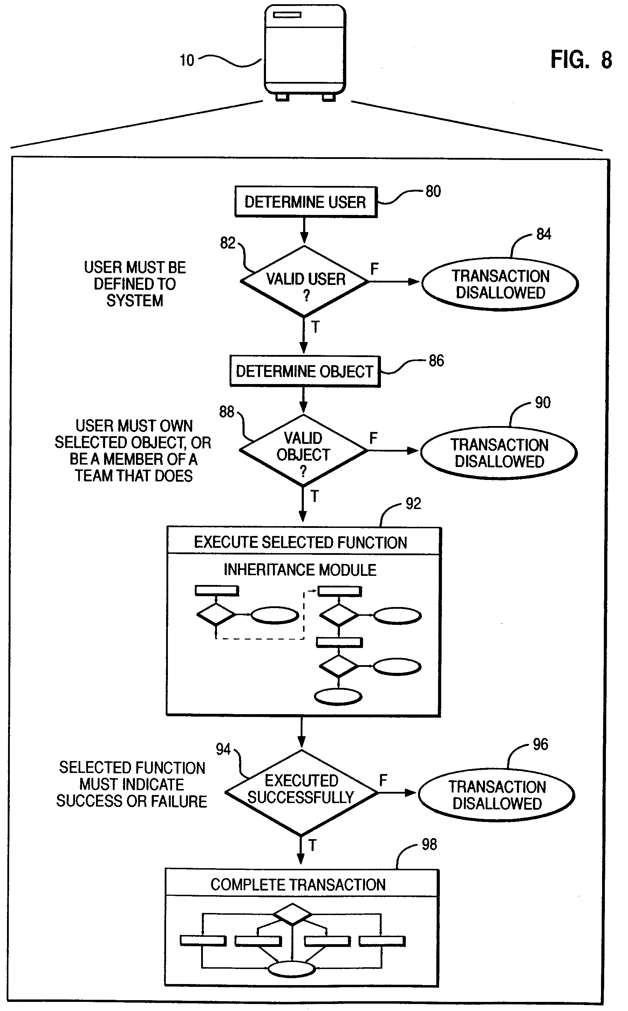

Turning now to Fig. 2, it is a key feature of the invention to provide a primitive generic building block such as that of Fig. 2 employed repetitively to build a model of any arbitrary process. It will be appreciated that the invention admits to other forms of process building blocks and is not intended to be limited to that shown in Fig. 2. A fundamental inventive concept is the notion of a generic process building block wherein the block, in whatever form, is reused. As will be hereinafter more clearly seen, there are several key features associated with a generic process model building block of Fig. 2. First, such an approach enables a process modeler to represent states of the process utilizing the building block whereby the various states may be connected together like tinkertoys. Associated with each building block of Fig. 2 utilized to model a process is a generic preselected set of transitions controlling movement to a next state such as the return 18, schedule 22 (which remains in the same state), and complete 24 transitions exiting from the process state 20. Meaning of the nomenclature for these transitions will be described later and it will be appreciated that the nomenclature therefor and number of such transitions selected is not as important as the key concept that the collection of such transitions associated with a given state is repeated for each state. This concept gives rise to numerous benefits also to be hereinafter detailed such as allowing for the ability to provide detailed quality measurements of the process by the system, as well as process summaries at any level in the process also given rise to by the standardization of process transitions. Yet an additional beneficial feature afforded by this form of building block is that transition labels may be eliminated for clarity as shown in Figs. 5 and 7 for example for reasons that will become clear later.

For the present it is sufficient to note that in this example three general types of transitions are provided for, namely a "return" 18 causing process flow back to a prior state, a "complete" transition 24 causing flow to a next state, and a looping state such as that denominated "schedule" 22 (with no intent to indicate forward progress in the process). In the following description, again to illustrate that it is the notion of an identical set of transitions which is more important than the absolute number thereof, illustration is given of the looping or iterative transition 22 being actually broken down into three actions: a "schedule", an "assign", and a "do" action, for reasons unique to this particular illustrative process modeled. Nevertheless, these action items exhibit the uniform property that they are iterative on the current process state as distinct from the return and complete actions 18, 24, which pass flow to another process state. It will be noted in the previously referenced illustrative process diagrams such as that of Fig. 7 that by interconnecting multiple building blocks of Fig. 2 by means of the transition arrows, communication obviously is intended to occur at each such transition.

It was found in the modeling of some processes that in addition to a schedule action being intended to indicate scheduling, that in some cases an ownership issue would arise wherein it was necessary to reassign an action which was not an individual's responsibility giving rise to the "assign" action. Similarly, in modeling some actual processes it was further found helpful to add the "do" action to signify beyond mere scheduling where work was actually being performed relative to the given state.

Still referring to Fig. 2, the current process state 20 outlines the main processing that occurs for a given state which the building block is being utilized to describe. It identifies the entity such as a person in a human-oriented process, responsible for the actions associated with the state, describes the entry and exit criteria, and established/quality standards. As noted, the complete transition 24 moves the process to the next state and may cause assignment to another entity or person. The return transition 18, returns the process to the previous state and is utilized when the process has been misassigned for example. The schedule action 22 does not change process state, and is used to schedule when the next state change will occur, allowing for rescheduling when necessary.

Referring back to Fig. 1, the user interface module 14 enables users to interact with the system of Fig. 1 and vice versa. The control module or subsystem 10 provides several functions. It enables a user to select objects and then select one of the set of generic "life-cycle" actions or transitions such as those previously described. The control module further provides the function of validation of the user against the current owner or owners of an object, enables invocation of the selected action or transition (if the user is validated), and updates the state of the user, team, roll and object data according to the action taken, including maintaining an activity log of the object.

The reporting subsystem or module 12 of Fig. 1 enables automatic generation of object status reports by team, role, user, object type or individual object that includes a summary of objects by state. It further provides for automatic generation of object activity reports by the same grouping that includes a summary of the life-cycle activity, and further provides for other user-defined reports as desired.

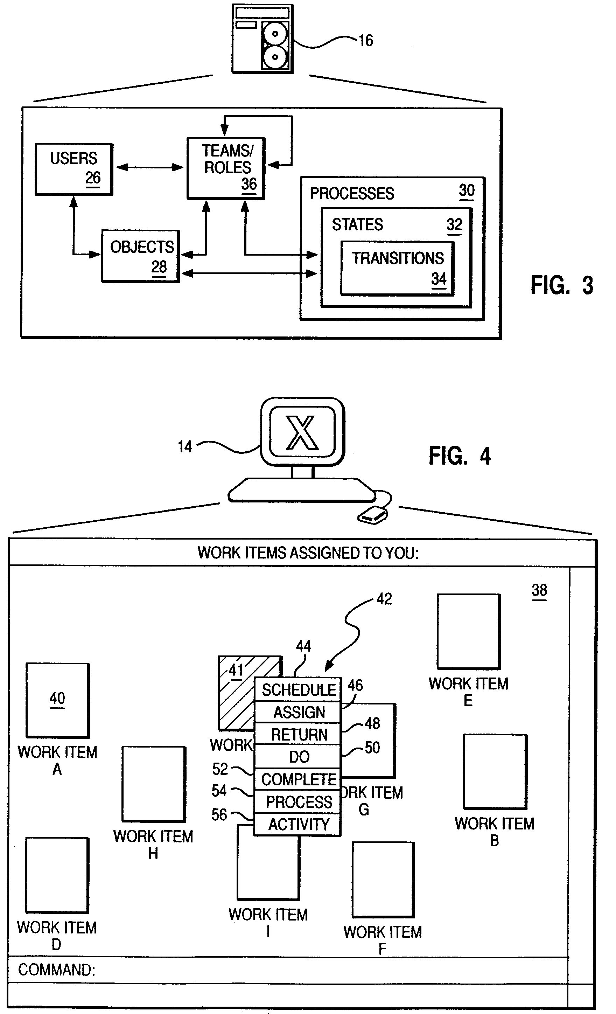

Fig. 3 illustrates the submodules comprising the storage module 16 of Fig. 1 and will be seen to be comprised of a user repository 26, team/role repository 36, object repository 28, and process repository 30.

The user repository 26 is provided to maintain information about individual actors in the system, each of which includes (but is not limited to) the following associated components "a list of teams/roles of which the user is a member, and a list of objects of which the user is the current owner".

The team/role repository 36 is provided for maintaining information about groups and subgroups in the system, each of which includes (but its not limited to) the following associated components: list of teams/roles of which the role is a member; list of members of this team/role; and list of objects of which any member of the team/role is considered a legal owner.

The object repository 28 is provided to maintain information of the many different kinds of objects which may be present in the process or system, each of which includes (but is not limited to) the following associated components: owner (which may be a team, role, or individual); process which governs the life-cycle actions or transitions of the object; current state within the process; and history of life-cycle activity.

The process repository is for purposes of maintaining information about the life cycle of the different objects in the system. Processes in a process to be modeled contain states which in turn contain transitions to next states from the current state. Such processes 30 have associated therewith in one implementation default code for every state with respect to Assign, Schedule, and Do actions, and default code for every transition of every state with respect to Complete and Return actions or transitions. Although the building block of Fig. 2 just shows "complete", "schedule", and "return", as previously noted, the model admits to extensibility.

The states 32 include Assign, Schedule, and Do code for each respective state, and default Complete and Return code for every transition from the respective state. Finally, transitions 34 contain Complete code and Return code for each particular transition and essentially are actions moving the process flow forward or backward. As previously noted, the nomenclature for such control actions (Assign, Schedule, Do, Complete and Return) is arbitrary as is the selection of the particular actions inasmuch as it is a feature of the invention to provide for a generic set of functions and nomenclature therefor which will be replicated with respect to each state of the process being modeled.

Still referring to Fig. 3, the process repository 30, as previously noted, includes information associated with the following associated components: a list of valid states within the process (that include but are not limited to, a user-specified action to be taken when the owner assigns the object to a new owner; a user-specified action to be taken when the owner schedules the object's next state change; a user-specified action to be taken when the owner does the work of the current state for this object; a list of valid initial states; a list of final states; a list of transitions (that includes but is not limited to a from state; to state; and user-specified action to be taken when moving the object forward in the life-cycle from the "from" state to the "to" state; a user-specified action to be taken when moving the object backward in the life-cycle from the "to" state to the "from" state; a user-specified function that returns a list of valid next states for any state in the process if not specifically overridden in that state; a user-specified function that returns a list of valid next owners for any state in the process if not specifically overridden in that state; and a user-specified action that is taken to change the state of the object for any state in the process if not specifically overridden in that state.

Referring to Fig. 4 now, an illustrative menu or screen 38 is shown generated automatically by the user interface module 14 which thus need not be coded by the integrator who is modeling the particular process under consideration. It is important to note in Fig. 4 that each object such as that represented by Work Item A40 displayed on the desk top metaphor of the screen 38 supports the same base set of control actions regardless of the process it may follow, thereby making it easier to learn than systems of the prior art.

For illustrative purposes, a Work Item C shown as reference numeral 41 in Fig. 4 is provided to illustrate a problem solving process which might be encountered. By selecting this Work Item C, 41, the familiar set of control actions 42 (Schedule, Assign, Return, Do and Complete) 44-52 appear enabling the user to activate functions described in the control module. It is an important feature of the invention that this identical set of generic control actions 44-52 would appear upon activating any such Work Item (like Work Item A, 40) of the screen 38 giving rise in part to the ease of use of the system in comparison with that of the prior art in Fig. 12. Thus no matter what Work Item the user has selected and regardless of the particular modeled process from which it is selected, the invention thus allows for a uniform user interface and menu as well as uniform generic control actions 42 to be automatically generated and appear. In other words when the user selects any object 40 and pulls down its menu, the same five actions 42 will appear. This is in contrast with models of the prior art naming each transition differently whereby the user interfaces and menu system are harder to build and use.

Two additional selections are provided when a Work Item is activated shown in Fig. 4, namely the process 54 and activity 56 although the invention is not limited to these. Selecting "activity" 56 will generate an activity summary report as described relative to the reporting module 12 of Fig. 1 hereinafter. As just noted, selecting any of the other activities 44-52 activates the particular function selected as described in the control module 10. Finally, selecting "Process" 54 results in the specific process associated with that object or Work Item (in this case Work Item C, 41) being schematically depicted on the screen 60 such as that shown in Fig. 5.

Referring now to Fig. 5 in greater detail, the invention enables building of this process picture automatically, based upon the definitions of the process in accordance with the method described herein. This screen 60, including illustrative menus 44, 72, is generated by the user interface module 14 and need not thus be coded by the integrator. The data associated therewith is accessed from the storage module 16 previously described. This feature wherein generic building blocks are employed makes it far easier to customize new processes and types of work items than in systems of the prior art. The particular menu displayed, 44, 72, depends upon whether a state 64, or transition 74 is selected, respectively. The screen 60 is a representative illustration of how the building block model of Fig. 2 simplifies the graphic depiction of a process flow. Only forward transitions need be shown, as all other transitions are assumed and need not be explicitly drawn. Further, no labelling of transitions is needed, making it easier to specify and understand the process under consideration than in prior art systems.

Although some users could perform the five actions 44-52 in the user interface module for a particular Work Item (Fig. 4) without needing to examine a schematic illustration of the associated process (Fig. 5), the invention provides for such a diagram of the process for individuals wanting to understand the overall flow of the process which is generated automatically and thus provides an easy-to-understand picture of the process.

With continued reference to Fig. 5, the familiar five actions 44-52 will appear generated from the user interface module 14 upon selecting a state such as "collect user input" state 64. Again, the benefit of having a generic set of actions in terms of ease of use is readily apparent. A user clicking on the Assign action 45, would then be shown what to do when assigning a new owner in this "Collect User Input" state (which of course may be different from what to do when assigning a new owner in the "Identify Issues" state 62). The picture of the process and required user actions are thus much clearer than in the case of the prior art of Fig. 12 since the five transitions enabled in the building block of Fig. 2 mean that only forward flow need be shown since backward flow in a transition is implied. As is uniformly the case with respect to the actions 44-52 wherever they appear, the Assign action 45 keeps the user in the same state (64 in this case) such that its iterative loop (such as the schedule 22 of Fig. 2) need not even be shown. This is also true with respect to the Schedule and Do actions.

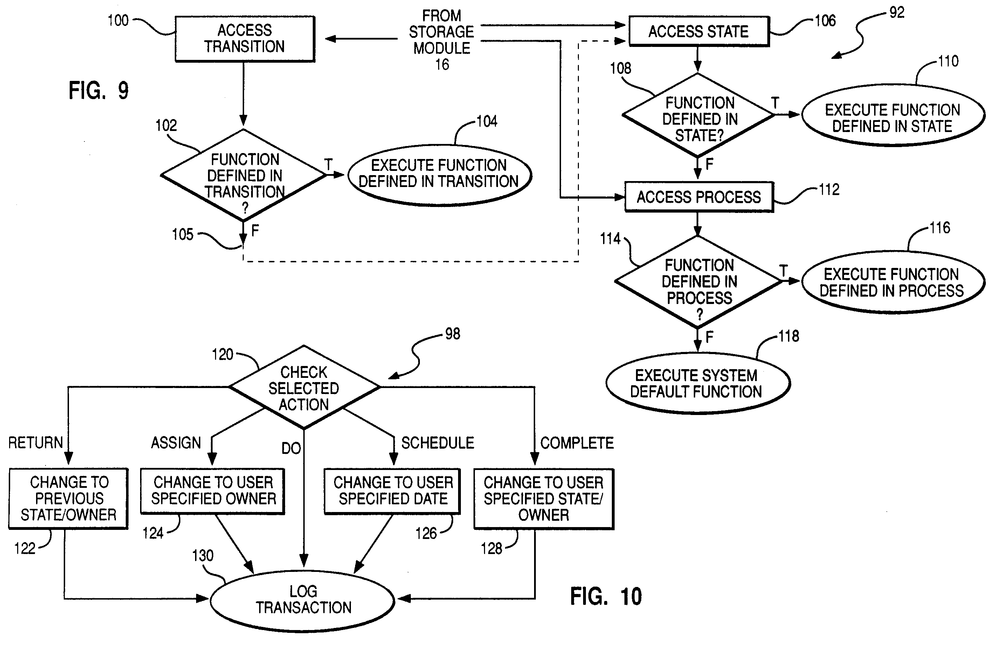

Referring now to Fig. 8, a more detailed illustration of a flow diagram of the control module 10 of Fig. 1 is shown. This module includes an inheritance submodule 92 and "complete" transaction submodule 98 shown in more detail with reference to Figs. 9 and 10, respectively. It is significant to note that, as will be described later, the code of this control module 10, including that of the inheritance module 92 and complete transaction module 98 is provided by the system and thus need not be coded by the integrator, thereby providing the feature of code reusability. More particularly, in the invention as noted, a modeled process is broken up with generic building blocks and code divided into sets of generic (in the illustration 5) actions. The system provides "glue" code automatically tying the pieces together. The code for the five actions is in individual modules, and may be separated out. In other words, one would not want code for doing an Assignment entangled with code for doing a Schedule because totally different issues may be associated with them. It would be undesirable for a change to the Schedule code to break the code for an Assignment. By separating code into five generic actions, the benefits of reusability, easier understanding of the process, and insulation are achieved, such reusability obviously resulting in less code needing to be written. The inheritance module processing code and complete transaction code 98, provided by the system, are defined in the storage module 16 as part of the definition of the process of the object and come into play to do the actual schedule or return action, etc.

Still referring to Fig. 8, in describing the operation of the control module 10, it will first determine the user 80 who has invoked an object by testing whether the user is valid 82. The user must be defined to the system and thus contained in the User's block 26 in the storage module 16 of Fig. 3. If the user is not valid, the transaction is disallowed 84. Next, the control module 10 determines the object being invoked 86, testing for whether it is a valid object at reference numeral 88. The user must own the selected object or be a member of a team that does in order for the object to be valid. Referring back to the storage module 16, Fig. 3, this information will be contained in the teams/roles submodule 36 and if a valid object is not selected, the transaction is disallowed 90.

Once a valid user and object have been selected, the user may select a desired function 92 and perform the work associated with that function such as Work Item C, etc. of Fig. 4. At this point, the system then awaits a decision from the user as to which of the five actions (44-52 of Fig. 4) the user desires to perform, whereupon the inheritance module 92 is executed (Fig. 9). Assuming the Work Item C was selected from the screen 38 displayed by the user interface module (Fig. 4), the processing of Fig. 9 will transpire with entry being dependent upon which action was selected. If a Return or Complete (51, 53, Fig. 5) were selected, the left branch of Fig. 9 is entered to access the appropriate transition 100 from the storage module 16. On the other hand, if the Assign, Schedule, or Do (45, 47, 49, Fig. 5) are selected, the right branch of Fig. 9 is entered at the access state block 106, wherein this state information is acquired by the system from the storage module 16. "Return" and "Complete" were utilized in the example to illustrate transition actions but a similar example would illustrate "Schedule", "do", and "Assign" state actions.

If the Return action was selected, this signifies an issue was given the user when in the Collect User Input state 64 which was wrong, which is why it is desired that the system return to the correct owner in the prior state for correction (completion of a field, etc.).

At the transition 63, Fig. 5, between the Identify Issues 62 and Collect User Input 64 states where a Return function is defined at the transition, the function is executed defined in the transition, 104, Fig. 9. If not, e.g. the system defaulted at the state level 105, Fig. 9, the system would then access the state 106 at the "Collect User Input" to determine if the Return function is defined there, as determined at block 108, Fig. 9. If the answer is yes, the function defined in the state is executed, 110. If not, the process is accessed 112, and it is determined if the function is defined at the process, 114. If so, the function is executed, 116, and if not, the system default is executed at 118.

If it is desired to Return only under certain conditions, code in the corresponding action may be provided to check the condition and if false, the transaction would be disallowed. Accordingly, policies may be built into the Return and Complete actions. The significance of this relative to prior art is that policies are thus broken into five components as opposed to one large policy for the whole state. In other words, a logical way is provided to break down the functions involved in moving Work Items through their respective processes.

Referring back to Fig. 8, a selected function must indicate a success or failure tested at block 94. If execution was not successful the transaction is disallowed, 96, but if completed successfully, the complete transaction module 98 of Fig. 10 is executed.

When a transaction is completed, and the complete transaction module 98 (Fig. 8, Fig. 10) is executed, the user's selected action is checked at block 120. When the transaction is completed, there is additional code provided by the system whereby if a Return action is selected, the state is automatically changed to a previous state and owner 122. If the user selects an Assign action, the system automatically changes the owner to the one specified, 124. If a Do action is selected, there is essentially nothing for the system to do as far as the process is concerned, although this action may invoke the proper tool for the task. If a Schedule is selected, the user-specified due date will be changed, 126, and finally if a Complete is selected, the system will change to a next state/owner as specified by the user.

Fig. 5 illustrates why user specification of a next state/owner may be necessary. If the user was in the "Identify Issues" state 162 and wanted to do a "Complete", the system would provide a menu indicating two states to choose from - 63, 74. 74 may for example, indicate a minor issue which may be treated as completed, whereas transition 63 may represent a real issue needed to be resolved which should traverse through the entire process states 64-70. From the foregoing, it will be noted that the system may thereby build automatic menus to essentially walk a user through a process sequentially and graphically.

Fig. 5 illustrates yet another aspect of the workings of the present system wherein out of the Review Decision state 68, two transitions may be provided - 74, 79. In transition 74, this may indicate a decision requiring essentially no work to be done which may be treated as Done or, in the alternative, a transition 79 requiring a Return or Complete 72 wherein an Oversee Deployment state 70 must be entered to ensure that the decision of state 68 is in fact implemented.

As noted, the code of Figs. 8-10 are provided by the system once and reused at other places in the system. This is possible because of the predefined set of operations allowed for the process building blocks. This is in contrast to prior art systems wherein much of the code must be rewritten, debugged, commented, tested, multiple times. Yet another point to be noted is that in Fig. 9 where the system accesses from the storage module 16 state and transition information, such information is being accessed from the storage module which essentially tells the system what function is to be performed. The inheritance module determined where the function is defined and executes appropriately. It is in this manner that interaction between the control and storage modules 10 and 16, respectively, come into play.

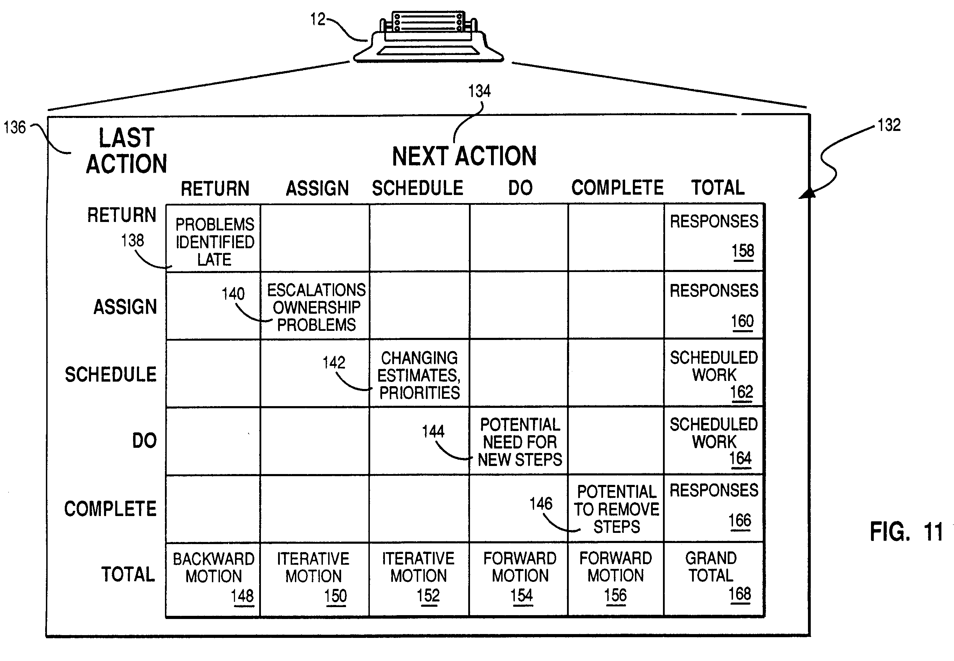

Referring now to Fig. 11 in the last module, the reporting module 12 of Fig. 1, it is a feature of the invention resulting from the process building block technique of Fig. 2, to generate various reports and matrices utilized in managing and optimizing the process and comparing components of the process to each other and to other processes. The user interface module 14, in one implementation, will thus generate for example, in conjunction with the reporting module 12, a matrix 132, Fig. 11. In the prior art various systems are available for defect prevention wherein a causal analysis is performed when defects in the product of a process are discovered to locate problems with the process. In contrast, the matrix function provided by the present invention, as will be made more clear hereinafter, enables one to pinpoint where there are problem areas in the process without the need for a specific problem pointing to the problem area of the process. In other words, the matrix generated as a result of the building block aspect of the invention enables a user to determine even if there is no specific defect discovered with stage X of the process, if there is a need to improve turnaround time for example. For example, in a particular process, it may be that there are simply too many Do operations for a given complex state indicating a need to split it into multiple separate states in order to more clearly understand how the process is operating. Also, if lots of "Do's occur, one might examine the process and find that some are unnecessary or others can be automated.

Referring more particularly to Fig. 11, in the vertical direction the generic list of actions is shown in a column associated with this same generic list of actions is also repeated in a horizontal direction with the next action 134. Because this same generic collection of action items is utilized with the process building block of Fig. 2 with respect to each state, it is possible to compare next and last actions 134, 136 in the manner depicted in Fig. 11 by tracking data associated with these action, specifically estimated time, effort and cycles, actual time, effort, and cycles. This gathered information may then be utilized to effect continuous improvements in the process since each intersection of the matrix has a different interpretation with respect to quality as will be described in more detail.

Thus, processes may be compared more easily to other processes in terms of the summary data such as that described in Fig. 11 because of the consistency between states. The data may be summarized and compared by project, or by any arbitrary set of states within and between projects (e.g. historical projects may be compared to recent ones, design states may be summed across projects and compared against development states and the like).

Focusing on the intersection of data associated with the return action of the last action row and next action column indicated at reference numeral 138 (the return action being the action which placed one in the current state), this may be indicative of problems being identified late. This is a "return" action followed by another "return" action. For example, an inordinate number of Return actions may be indicated at 138. This may suggest that a policy permitting a user to execute a Complete action is too weak, permitting the user to traverse to the next state when he or she should not. Accordingly a new policy may be added to each transition where excessive Returns may be recurring. For example, with respect to the example process of Fig. 5, this may suggest correcting policy to require that better user input be collected before determining resolution.

It will be noted that the system of the invention would not indicate what new policy to effect, but would indicate where to place the policy and generally would suggest looking for a policy that tightens up a specification of what comes out of an "Identify Issues" state 62, for example and flows into the "Collect User Input" state 64, further suggesting that the new policy be placed in the Complete action for the Identify Issues state. The process control system, as thus amended as a direct result of the subject invention, would not permit a user to traverse to a next state until a user had satisfied all of the requirements of the new policy. In other words, as a result of the matrix indicator of Fig. 11, the system may now provide that a transition to a next state is disallowed because the Complete action indicates the requirements are not completed yet (a field in an object has not been completed).

Still referring to Fig. 11, the intersection of Assign actions 140, relative to the last action and next action of a process modeled in accordance with the invention (e.g. an "assign" followed by an "assign") similarly indicates qualitative aspects of the process. Specifically inordinate activity at this intersection may suggest a need to reduce time built up in iterative motion 150. This intersection measures potential large cycle times being used with nothing being accomplished. It will be noted in passing that at the bottom of Fig. 11 there is an indication with respect to each action as to whether the motion associated with the action is backward, 148, iterative, 150, 152, or forward motion 154, 156. If an inordinate amount of Assign activity is detected, this may be addressed by building more intelligence into the Assign activity alone, not requiring effecting of the Return, Do, or Schedule activities. Thus, more particularly, code may be added to the Assign and Complete actions providing a policy regarding who may own actions when they arrive at a state, e.g. policies governing permitting a user to assign an Assign or Complete action to a particular person. As an example with respect to the illustrative process of Fig. 5, managers perhaps should own the Review Decision state 68, technical personnel should own the Determine Resolution 66, and customers should own the Collect User Input state 64.

When an Assign action is thus run under a Review Decision state 68 of Fig. 5, for example, it may therefore fail after the process has been revised in accordance with the matrix of Fig. 11. This will accordingly indicate that the user is not the correct person to own the action as he or she is not the manager of a team which reviews decisions under the Review Decision state. Accordingly, the user will not be permitted to reassign unless there is a match to the policy embedded in the Assign or Complete action. Therefore the user cannot move the process from one state to another or to someone else in the same state if this is not allowed.

Continuing with Fig. 11 and the benefits afforded by the matrix therein, the intersection of Schedule actions of a next and last action 142 (e.g. a "schedule" followed by "schedule"), is where the system of the invention perhaps is least helpful in improving process quality inasmuch as it will merely show evidence of such scheduling and does not perform any planning function. Inordinate execution or cycle times evidenced in this intersection are evidence of bad estimating or planning or a change in priorities, and may require better scheduling. In a sense, however, the system does assist in planning and scheduling in that the interface of Fig. 4 nevertheless does indicate the Work Items for which a user is responsible.

The matrix of the system, Fig. 11, as previously described, may be utilized to minimize the iterative motion 150 of an inordinate amount of Assign activity and further to minimize this backward motion 148 associated with Return actions. However, unlike prior defect management and the like systems, with the invention one may readily and in an automated fashion very easily separate actions moving backwards from those which move forward such as the Do and Complete actions. Specifically, the matrix system of Fig. 11 facilitates concentrating on these forward motion type actions and how to optimize them. Regarding the intersection of Do actions 144, in contrast when Return actions occur 138, the user knows it was because of quality problems resulting in backward motion.

Taking first the Do action, excess activity at the intersection 144 may indicate, as previously described, that a particularly complex activity is occurring requiring a long time to complete. This may suggest a need to provide more communication as to what's going on in this particularly complex state by breaking it into multiple states. One may be particularly good at accurately scheduling a complex task to be completed over a long period of time but the customer of the process in the meantime has no clue as to whether the process is moving along correctly. Accordingly, an inordinately high indication of Do activity may indicate places in the modeled process where one might want to break up some complex states into smaller states which are simpler to follow in order to provide better communication.

Finally with regard to the intersection of the complete activities of the last and next action 146 (e.g. a "complete" followed by "complete"), this may indicate a potential to remove steps 146.

In some processes if one individual completes an action to another who in turn completes it to yet another individual with nothing being done other than a token signoff, this may delay the process and be deemed an unnecessary step. If the policy of the action item merely passing for one's approval is important, such policy may be embodied in the Complete action. This is similar to the prior example of addressing an inordinate amount of activity with respect to the Return action wherein one may go to the transition and modify, for example, the Complete action to eliminate unnecessary steps. If the "Review Decision" state 68 was in fact a pro forma signoff, the data provided by the matrix of Fig. 11 may suggest building into the Complete state of the "Determine Resolution" state 66 what the policy of the "Rubberstamp" is. In this manner, when the Complete action is done, the "Review Decision" state is immediately passed through to the "Oversee Deployment". Therefore by fixing policies as suggested by the matrix, unnecessary steps are removed.

The reporting module 12 of the present invention is rich in function. Because of the process building block of Fig. 2 and the log transaction step 130 of Fig. 10, the system enables an automatic reporting method very easily which scans these activity logs, automatically determines how the process got in each state (e.g. Return, Assign, Schedule, Do, Complete), the actions the user ran to determine the next action, the time required from the start to the end of a transaction, the incremental cycle count, the time from the last activity run against the Work Item to the present one, cycle time, etc. In other words due to the generic identity of action items inter and intra process state comparisons may be readily done and made available to the system user such as in the case of the matrix of Fig. 11.

From the foregoing it may be appreciated that a significant feature of the invention is to provide a selected generic set of general actions repeatedly used to describe each state of a process which are significant at the transition level as opposed to the state level, thereby facilitating defining each state in a uniform way across the system by such labeling of transitions generically for each and every state. These illustrative Do, Schedule, Assign, Complete, and Return generic transactions comprising each process building block work against a state. The Complete action describes policy and actions to move to a next state in the process; the Return action describes policy and actions to move to a prior state in the process; the Assign action describes policy and actions to move to a new owner; the schedule action describes policy and actions to change the expected due date of an action item; and the Do action describes the policy and actions to perform the real work of the state itself.

Numerous significant benefits flow from the provision in the subject invention of the important features of the process building block and the matrix constructed from actions made possible due to the identical transitions associated with each.

First, process policy (e.g. conditions under which state changes may occur) may be easily separated and thus not tangled with code which causes state changes. This in turn results in easier to understand policy and change action separately, ability to modify either policy or change actions without affecting the other, and improved readability and reusability of code.

Additionally, because of the genericism of the actions, this results in a user interface making it easier to learn, use, and describe a process. The user is only required to learn one process model and set of actions regardless of the particular process. These actions are the same no matter what state is entered, whereby the user is not required to reference a complex state-to-transition mapping to determine a legal action at a given state. Moreover, in terms of the user interface, a more clear process picture is provided and automatically built.

Still further, the invention provides for an ability to describe the process in an easier manner with more clarity. Transitions needn't be labeled unlike standard state transition diagrams where such transitions are customized to each state and thus not generic. In accordance with the invention, only forward direction need be shown in the visual representation of the process since forward motion is assumed to be paired with transitions back to the originating state and showing of other transitions is redundant since each state has the same transitions.

Moreover, the subject invention provides for an easier automation of process control inasmuch as the system provides built-in code reusable by the integrator who is automating a particular process and which governs movement from state-to-state. As previously indicated, the integrator may thus avoid recoding these policies.

Still further, regarding the reporting functions of the invention, it affords an easier means to measure the process and interpret data at any level in the process. The same set of actions enters and exits a given state. Accordingly, construction, for example, of a two-dimensional matrix is readily facilitated of the same actions horizontally and vertically. Such a matrix may be utilized to summarize the effort and time on a project, assess quality, be utilized and continuously improve process proactively since each intersection of the matrix has a unique quality implication.

Still further, the subject invention provides for an easier means to compare processes and the results of prior process summaries because of the consistency of states between processes and projects utilizing the same generic process building blocks. Therefore data between projects, arbitrary sets of states within and between processes and projects may be easily compared. Also because of the generic building block and intelligence in the system being in the states and direction of flow between the states (as opposed to the kinds of connections or transitions), any arbitrarily complex process may be described. It is further easier thus to build automated tools to drive the process, collect data, and automatically generate status and summary reports such as the aforementioned matrix at any state or level within the process.

While the invention has been shown and described with reference to particular embodiments thereof, it will be understood by those skilled in the art that the foregoing and other changes in form and details may be made therein without departing from the spirit and scope of the invention.

## Claims

1. A computerized process control system comprising
a user interface means (14) adapted to define a set of actions requiring user interaction with said system;
a storage means (16) for storing information relating to said actions defining actors, groups, objects, and life-cycles of said objects;
said storage means (16) including means for storing transitions generated from a generic process building block; and
a control means (10) interconnected to said user interface means (14) and said storage means (16) for executing said process control in response to said information and said user interaction.

2. The system of Claim 1 wherein said building block from which each of said transitions is generated includes
a preselected set of generic actions common to each of said transitions.

3. The system of Claim 2 wherein said generic actions include at least a return (18), complete (24), and schedule (22) action.

4. The system of Claim 3 wherein said generic actions further include a do and assign action.

5. The system of Claim 4 wherein said storage means (16) includes
a user repository means (26) for storing information defining said actors.

6. The system of Claim 5 wherein said user repository means (26) includes
means for indicating teams and roles of which said user is a member.

7. The system of Claim 5 wherein said user repository means (26) further includes
means for indicating objects currently owned by said user.

8. The system of Claim 4 wherein said storage means (16) includes
a team-role repository means (36) for maintaining information defining said groups and subgroups in said system.

9. The system of Claim 8 wherein said team-role repository means (36) includes
means for indicating teams and roles of which said role is a member.

10. The system of Claim 9 wherein said team-role repository means (36) includes
means for indicating members of said teams and roles.

11. The system of Claim 8 wherein said team-role repository means (36) includes
means for indicating said objects of which any member of a team or role is an authorized owner.

12. The system of Claim 4 wherein said storage means (16) includes
an object repository means (28) for maintaining information of differing kinds of said objects in said system.

13. The system of Claim 12 wherein said object repository means (28) includes
means for indicating said owner.

14. The system of Claim 13 wherein said owner is selected from the group comprising a team, role, or individual.

15. The system of Claim 12 wherein said object repository means (28) includes means for indicating a process governing said life-cycles of said object.

16. The system of Claim 12 wherein said object repository means (28) includes
means for indicating current state within said process.

17. The system of Claim 12 wherein said object repository means (28) further includes
means for indicating history of said life-cycles.

18. The system of Claim 4 wherein said storage means (16) includes
a process repository means (30) for maintaining said information about said life-cycles of said differing kinds of said objects in said system.

19. The system of Claim 18 wherein said process repository means (30) includes
a means for listing valid states (32) within said process.

20. The system of Claim 19 wherein said means for listing valid states (32) includes
means for storing an action to be taken when one of said owners assigns said object to a new owner.

21. The system of Claim 19 wherein said means for listing valid states (32) includes
means for storing an action to be taken when said owner schedules a next state change of said object.

22. The system of Claim 19 wherein said means for listing said valid states (32) includes
means for storing an action to be taken when said owner completes work of a current said state for a corresponding said object.

23. The system of Claim 18 wherein said process repository means (30) further includes
means for listing valid initial said states.

24. The system of Claim 18 wherein said process repository means (30) includes
means for storing a list of terminal said states.

25. The system of Claim 18 wherein said process repository means (30) further includes
means for storing a list of transitions (34) selected from a group including a from state, a to state, an action to be taken when moving said object forward in said life-cycles from said from state to said to state, and an action to be taken when moving said object backward in said life-cycles from said to state to said from state.

26. The system of Claim 4 wherein said storage means (16) further includes
a control subsystem means for enabling said user through said user interface means (14) to select said objects and a corresponding one said action of Claims 20, 21, 22 or 25.

27. The system of Claim 26 wherein said control subsystem means includes
means for validating said user against a current owner of said object.

28. The system of Claim 27 wherein said control subsystem means further includes
means for invoking said corresponding one of said actions if said user is valid.

29. The system of Claim 28 wherein said control subsystem means further includes
means for updating state of data corresponding to said user, teams, roles, and said object according to said corresponding one of said actions taken.

30. The system of Claim 29 wherein said means for updating said state includes means for maintaining an activity log of said object.

31. The system of Claim 4 further including
a reporting means (12) interconnected to said control means (10) for automatically generating a matrix (132) correlating last and next actions (136, 134) from said activity log.

32. The system of Claim 31 wherein said reporting subsystem means (12) further includes
means for automatically generating object status reports by team, role, said user, type of said objects, or individual said objects, including a summary of said objects by state.

33. The system of Claim 31 wherein said reporting subsystem means (12) further includes
means for automatically generating object activity reports including a summary of said life-cycles activity.

34. A method for operating a computerized process control system having a user interface for indicating quality of management of said process by said system, comprising
storing in said system a model of said process, wherein each of a plurality of states of a state transition diagram of said model is represented by a generic process building block;
logging transactions associated with each of said plurality of states during operation of said system; and
generating in response to said logging a matrix (132) relating generic transaction actions of a last action (136) and a next action (134) in said process.

35. The method of Claim 34 wherein said generic building block includes a plurality of said generic actions used in said model to represent each of said plurality of states.

36. The method of Claim 35 wherein said actions are selected from the group comprising return, schedule, and complete.

37. The method of Claim 35 wherein said actions are selected from the group comprising return, assign, schedule, do, and complete actions.
